# FASCICULE DE BREVET EUROPEEN

(11) **EP 1 465 930 B1**
(45) Date de publication et mention de la délivrance du brevet: **03.05.2006**
(21) Numéro de dépôt: 03712245.4
(22) Date de dépôt: 15.01.2003
(51) Int. Cl.: C08F 8/30, C08F 8/34, C08K 5/00

(54) **POLYMERES SUPRAMOLECULAIRES**
SUPRAMOLEKULARPOLYMERE
SUPRAMOLECULAR POLYMERS

(30) Priorité: 17.01.2002 FR 0200596
(43) Date de publication de la demande: 13.10.2004
(73) Titulaire: Arkema, 92800 Puteaux (FR)
(72) Inventeur: TOURNILHAC, François-Genes, F-75011 Paris (FR); SOULIE-ZIAKOVIC, Corinne, F-75013 Paris (FR); LEIBLER, Ludwik, F-75016 Paris (FR); LACHAIZE, Laurent, F-94210 La Varenne Saint Hilaire (FR)
(74) Mandataire: Neel, Henry
(86) Numéro de dépôt international: PCT/FR2003/000114
(87) Numéro de publication internationale: WO 2003/059964

(56) Documents cités:
- EP-A- 0 257 640
- EP-A- 0 351 091
- EP-A- 0 377 337
- WO-A-97/49686
- WO-A-99/25748
- DD-A- 212 258
- US-A- 4 544 609
- US-A- 5 422 042

## Description

### [Domaine de l'invention]

La présente invention concerne des polymères supramoléculaires. Les polymères supramoléculaires sont des polymères dans lesquels les motifs sont des monomères ou des prépolymères de faible masse qui sont reliés entre eux par des liaisons hydrogène ("H bridges" ou "H bonds") alors que dans un polymère conventionnel les motifs sont reliés entre eux par des liaisons covalentes. Un avantage de ces polymères supramoléculaires est que ces liaisons hydrogène sont réversibles. Par exemple dans la technologie des revêtements on a besoin d'un polymère ayant une faible viscosité sous un cisaillement à haute vitesse pendant son application et qui redevient visqueux après son application. De préférence les motifs prépolymères dans la présente invention contiennent des groupements imidazolidone qui forment des liaisons hydrogène selon le schéma suivant :

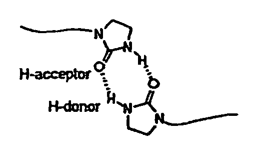

Ces motifs prépolymères peuvent être préparés très facilement par réaction de l'urée sur des polyalkylèneimines, des polyamines ou des polyamides.

### [L'art antérieur et le problème technique]

Le brevet US 6320018 décrit des polymères supramoléculaires à base de motifs ayant des groupements ureido-pyrimidone. La demande de brevet EP 1031589 décrit des polymères supra moléculaires à base de motifs à fonctions isocyanates ou leurs dérivés. La demande de brevet EP 1136506 décrit des polymères supramoléculaires à base de motifs à fonctions glutarimides. La demande de brevet WO 01 07396 décrit des polymères supramoléculaires à base de motifs ayant des fonctions hydroxyles et des fonctions acides carboxyliques portées par des noyaux aromatiques.

On a maintenant trouvé des polymères supramoléculaires dans lesquels les motifs sont des monomères ou des prépolymeres qui peuvent être fabriqués de façon très simple, beaucoup plus simple que dans l'art antérieur. Il suffit par exemple de faire réagir de l'urée sur un produit ayant des fonctions NH2 ou NH séparées par 2 ou 3 atomes de carbone. De plus certains de ces monomères ou prépolymères sont des produits nouveaux en eux mêmes.

### [Brève description de l'invention]

La présente invention concerne un polymère supramoléculaire comprenant des motifs reliés par des liaisons hydrogène, ces motifs étant des monomères ou des prépolymères comprenant au moins une fonction choisie parmi les fonctions (1) et (3) et une deuxième fonction choisie parmi les fonctions (1) à (5) suivantes : 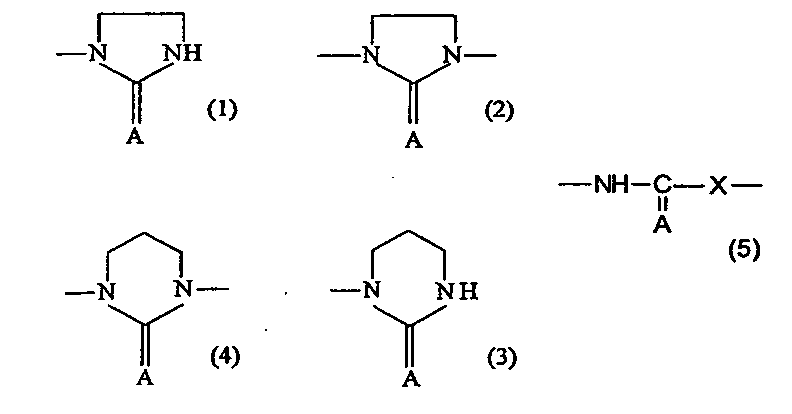 dans lesquelles A désigne l'oxygène, le soufre ou NH et X un motif quelconque; les liaisons hydrogène dans le polymère supramoléculaire se faisant entre deux fonctions identiques ou différentes choisies parmi les fonctions (1) à (5). Les atomes de carbone sur les formules (1) à (4) peuvent être substitués.

Les monomères ou prépolymeres comprenant au moins l'une des fonctions (1) à (4) peuvent être obtenus par réaction d'un produit de formule (6) suivante : 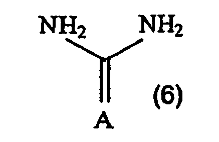 sur toute chaîne de monomère ou prépolymère contenant des fonctions -NH2 et -NH- ou -NH- et -NH- séparées par 2 ou 3 atomes de carbone, ces atomes de carbone pouvant porter des substituants autres que des hydrogènes.

La fonction (1) est obtenue par réaction du produit (6) sur un monomère ou un prépolymère contenant les enchaînements (1') suivants:

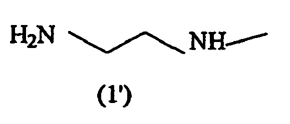

La fonction (2) est obtenue par réaction du produit (6) sur un monomère ou un prépolymère contenant les enchaînements (2') suivants:

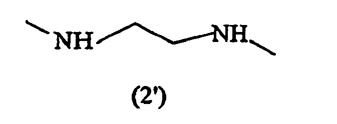

La fonction (3) est obtenue par réaction du produit (6) sur un monomère ou un prépolymère contenant les enchaînements (3') suivants:

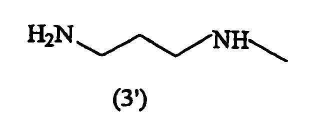

La fonction (4) est obtenue par réaction du produit (6) sur un monomère
ou un prépolymère contenant les enchaînements (4') suivants :

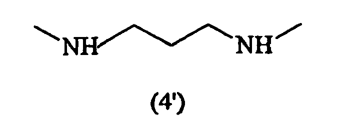

Il est bien clair que dans les formules (1') à (4') les atomes de carbone qui sont entre les azotes peuvent être substitués.

Les polymères de l'invention peuvent être utilisés seuls c'est à dire sous forme de composition constituée essentiellement de ces polymères et éventuellement de stabilisants, d'antioxydants etc... soit sous forme de mélange avec d'autres polymères ou d'autres produits.

Les polymères de l'invention sont particulièrement utiles comme :
- modificateurs de rhéologie pour des peintures ou des revêtements,
- additifs pour faire varier la fluidité des peintures epoxy avec la température et en particulier dans les peintures en poudre,
- additifs dans la mise en oeuvre des thermoplastiques pour effectuer une réticulation réversible,
- additifs pour faciliter le recyclage des matières thermoplastiques par destruction des liaisons hydrogène par un solvant spécifique,
- additifs dans des revêtements pour ensuite faciliter leur décapage par un solvant spécifique des liaisons hydrogène,
- additifs pour la modification choc des polyamides.
- additifs dans les hot-melts (colles thermofusibles),
- hot-melts,
- additifs dans des lubrifiants.

La présente invention concerne aussi les utilisations citées ci dessus ainsi que les compositions comprenant les polymères supramoléculaires de l'invention.

### [Description détaillée de l'invention]

S'agissant des monomères ou prépolymères comprenant au moins une fonction choisie parmi les fonctions (1) et (3) et une deuxième fonction choisie parmi les fonctions (1) à (5) avantageusement "A" désigne un atome d'oxygène.

Les monomères ou prépolymères contenant une ou plusieurs des fonctions (1) à (4) peuvent être obtenus par réaction d'un produit de formule (6) sur des monomères ou prépolymères portant les precurseurs correspondants (1') à (4') ainsi qu'il est expliqué plus haut.

Ces monomères ou prépolymères comprenant au moins l'une des fonctions (1) à (4) peuvent aussi être fabriqués par fixation de ces fonctions sur un produit pour le transformer en monomère ou prépolymère porteur de ces fonctions (1) à (4).

Par exemple on fait réagir une polyamine avec de l'urée, c'est à dire le produit de formule (6) dans lequel A est un atome d'oxygène, puis cette polyamine portant des fonctions (1) et une fonction -NH- réagit avec un halogénure d'alkyle pour former un monomère ou un prépolymére portant les fonctions (1). Ceci est illustré par le schéma suivant avec une polyamine particulière :

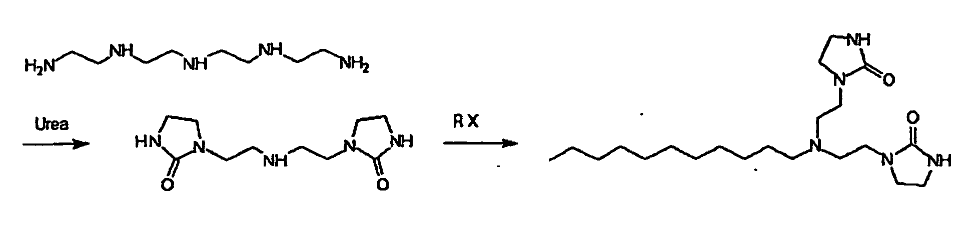

Selon un autre exemple on fait réagir de l'urée sur la diéthylène triamine, on obtient : 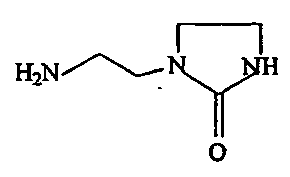 qu'on fait réagir ensuite sur un monomère ou un prépolymère portant au moins une fonction acide carboxylique pour obtenir un monomère portant les fonctions (1) et (5).

Selon les utilisations des polymères de l'invention, les monomères et les prépolymères qui le constituent peuvent contenir d'autres monomères ou prepolymères qui provoquent un désordre moléculaire empêchant la cristallisation.

S'agissant du produit de formule (6) on peut utiliser un mélange de plusieurs produits (correspondant aux différents "A"), c'est à dire un mélange d'urée, de thiourée et de guanidine. Avantageusement on utilise l'urée.

S'agissant des monomères ou prépolymères contenant des fonctions -NH2 et -NH- ou -NH- et -NH- séparées par 2 ou 3 atomes de carbone on peut citer les polyamines telles que la diéthylène triamine (DETA), la triéthylène tetramine (TETA), et la tetraéthylène pentamine (TEPA). On illustre ci dessous des exemples de monomères ou prépolymères portant des fonctions (1) et (2) dans lesquels A est un atome d'oxygène.

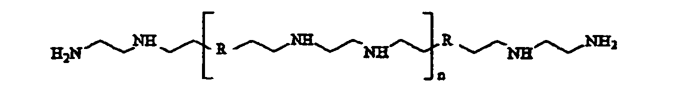

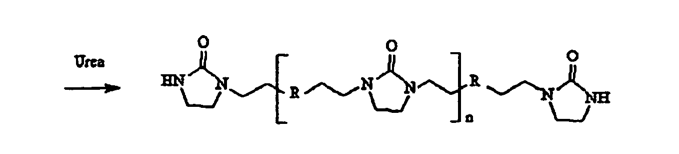

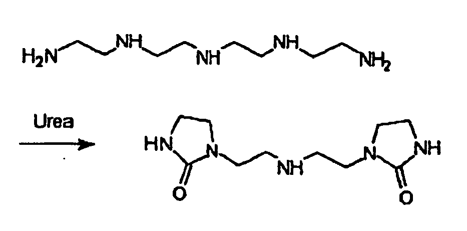

On peut encore citer les diamines dérivées des diméres d'acides, la formation des fonctions (1) dans lesquelles A est un atome d'oxygène est illustrée ci dessous :

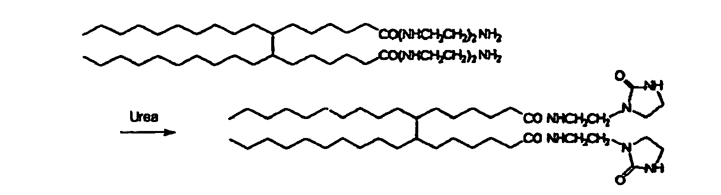

On peut encore citer les prépolymères de type polyamide résultant de la condensation de polyamines telles que les DETA, TETA et TEPA citées plus haut avec des diacides. De préférence ces diacides sont des acides gras. De préférence ces diacides contiennent des traces de trimères d'acides. Ceci est illustré par le schéma suivant dans lequel le produit de formule (5) est l'urée.

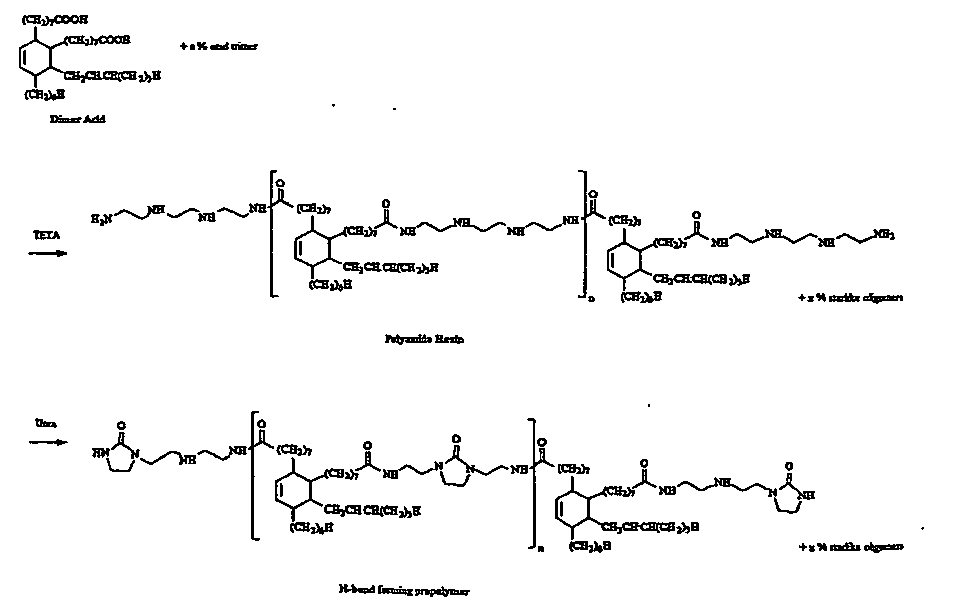

Dans ce schéma "x% starlike oligomers" désigne des oligomères en étoile sous produits par la présence des trimères d'acides "x% acid trimer".

### [Exemples]

### Exemple 1 :

Dans un ballon de 100 mL muni d'un agitateur magnétique et d'un réfrigérant, on place 16g (110 mmol) de triéthylene tetramine (Dow Chemicals, pureté 60 % env. • Note 1), 12g (200 mmoL) d'urée et un petit morceau de carborandum. La température est progressivement portée à 120° C. L'urée se dissout et un dégagement gazeux d'ammoniac se produit L'échauffement est poursuivi progressivement. Vers 160°C la viscosité augmente fortement, l'utilisation d'un papier indicateur de pH placé au haut du réfrigérant permet de contrôler le dégagement d'ammoniac. Lorsque la température avoisine 190°C, le mélange réactionnel cristallise. Après refroidissement, les cristaux sont lavés au méthanol, deux fractions sont recueillies :
- La fraction solide, essentiellement constituée d'éthylène-bis-dümidazolidone et recristallisable dans l'eau PF=252.4 °C (litt. 240-245°C). L'éthylène-bis-diimidazolidone contient 2 fonctions (1) est très pur donc il cristallise.
- La fraction soluble dans le méthanol, évaporée à sec et mise en solution aqueuse à 33 % en masse. Cette solution aqueuse est appelée solution mère, elle contient le monomère de l'invention comprenant les fonctions (1).

Cette fraction ne cristallise pas à cause d'un désordre moléculaire provoqué par des impuretés de la triéthylene tetramine. L'analyse montre que cette fraction est composée majoritairement de éthylène-bis-dümidazolidone (A), N-piperazinoethyl-imidazolidone (B), Bis AEP: N,N'-bis-(2-aminoethyl)-piperazine (C), Branched TETA: tris-(2-aminoethyl)amine (D). 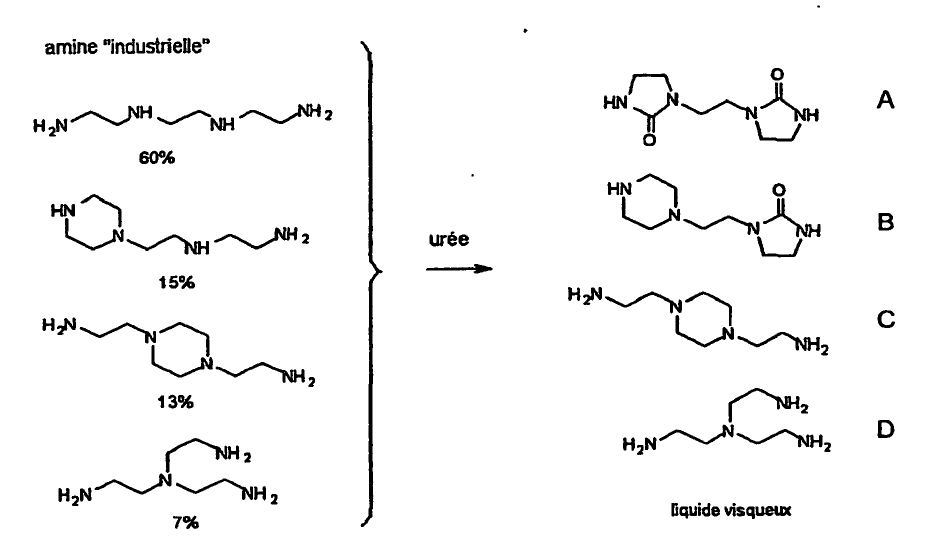
- Note 1: Le grade utilisé est un mélange d'éthylène amines linéaires, cycliques et branchées de points d'ébullition proches. TETA: N,N'-bis(2-aminoethyl)-1,2-ethanediamine, Bis AEP: N,N'-bis-(2-aminoethyl-piperazine), PEEDA N-[(2-aminoethyl)-2-aminoethyl]piperazine, Branched TETA: tris-(2-aminoethyl)amine.

### Exemple 2:

### Il illustre l'utilisation des polymères de l'invention comme modificateurs.

On illustre la réticulation d'acide polyacrylique par le polymère de l'invention.

A 3 g de solution mère (exemple 1), ont additionne 150 mg (masse de l'extrait sec) d'acide polyacrylique, PAA sous forme de solution aqueuse.

Le mélange est versé dans un moule circulaire de PTFE (⌀=50mm). Après un séjour de trois semaines en enceinte climatique (T=23°C, HR=50%), les films obtenus (épaisseur env. 0.4mm) peuvent être détachés du moule et manipulés. Les températures de transition vitreuse (Tg), mesurées par analyse enthalpique différentielle (AED) sont consignées dans le tableau suivant:

| ***Echantillon*** | **1** | **2** | **3** |
|---|---|---|---|
| PAA ref. | Coatex DV375 | Coatex DV49 | Coatex DV284 |
| PAA Mn | 1800-2000 | 8000 | 500000 |
| PAA % extrait sec | 50% | 45% | 35% |
| Tg échantillon | 57°C | 53°C | 70°C |

### Exemple 3 :

Dans un ballon de 500 mL équipé d'un agitateur magnétique et d'un réfrigérant on place 10.5 g (41 mmol) de triéthylene tetramine (Dow Chemicals, pureté 60 % env. • Note 1) et 50 mL d'éthanol. La solution est portée à reflux (bain d'huile à 90°C). 6.47 g (34 mmol) de 1,2-dibromoéthane en solution dans 50 mL d'éthanol sont ajoutés goutte à goutte à l'aide d'une ampoule d'addition. Après addition, le mélange réactionnel est maintenu au reflux pendant 3 heures.

L'analyse par chromatographie en phase gazeuse couplée à la spectrométrie de masse montre une diminution de la proportion de TETA et un enrichissement en produits de mono addition: Bis AEP, PEEDA et de di-addition bis-piperazinyl-ethylene BPE:

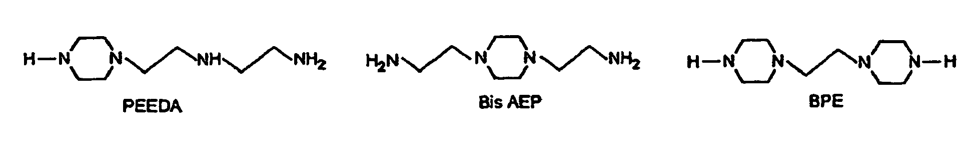

La procédure (addition goutte à goutte de 34 mmol de dibromoethane puis reflux 3 heures) est répétée jusqu'à ce que les teneurs en TETA et PEEDA soient approximativement égales dans le mélange.

Après évaporation sous vide du solvant et autres matières volatiles et refroidissement on ajoute 2.4g (40 mmol) d'urée. Le mélange est alors traité suivant les indications de l'exemple 1. En fin de réaction, le mélange réactionnel ne cristallise pas mais forme une masse vitreuse soluble dans l'eau.

Le mélange obtenu, combiné à l'acide polyacrylique permet de former des films suivant les indications de l'exemple 2.

### Exemple 4 :

20.8 g (110 mmol) de tetraéthylène pentamine (Dow Chemicals, pureté 60 % env. • Note 2) et 12g (200 mmol) d'urée sont traités suivant les indications de l'exemple 1. En fin de réaction, le mélange réactionnel ne cristallise pas mais forme une masse vitreuse soluble dans l'eau.

Le mélange obtenu, combiné à l'acide polyacrylique permet de former des films suivant les indications de l'exemple 2.
- Note 2: Le grade utilisé est un mélange d'éthylène amines linéaires, cycliques et branchées de points d'ébullition proches. TEPA: N-(2-aminoethyl)-N'-{2-[(2-aminoethyl)amino]ethyl}-1,2-ethanediamine), AETETA: 4-(2-aminoethyl)-N-(2-aminoethyl)- N'-{2-[(2-aminoethyl)amino]ethyl}-1,2-ethanediamine), APEEDA: 1-(2-aminoethyl)-4-[(2-aminoethyl)aminoethyl]-piperazine, PEDETA: 1-[2-[[2-[(2-aminoethyl)amino]ethyl]-amino]ethyl]-piperazine, POLYETHYLENEPOLYAMINES [CAS #029320-38-5, CAS #068131-73-7]

### Exemple 5 :

Dans un ballon de 500 mL muni d'un agitateur magnétique et d'un réfrigérant, on place 47 g de Crayamid 115 (• Note 3) et 16 g d'urée. Le ballon est immergé dans un bain d'huile à 100°C. La température du bain est élevée progressivement (env. +20°C/heure). L'utilisation d'un papier indicateur de pH placé au haut du réfrigérant permet de contrôler le dégagement d'ammoniac. Lorsque la température atteint 180° C, l'agitation devient difficile. Après au minimum 2h de réaction à 180° C, le chauffage est coupé. Au terme de la réaction, il peut arriver qu'un excès d'urée se soit sublimé et condensé sur les parois du ballon.

Après refroidissement, l'excès d'urée éventuel est éliminé à l'eau par rinçage rapide des parois du ballon. Le mélange réactionnel d'aspect vitreux est solubilisé dans 300mL de chloroforme, séché sur sulfate de magnésium puis filtré sur 4g de gel de silice. La solution obtenue, légèrement trouble est appelée solution mère.

Une partie de la solution mère est évaporée à sec à 60°C sous vide pour analyse:
IR: (KBr, cm-1)3302, 2924, 2853, 1654, 1608, 1546, 1490, 1456, 1377, 1271 Tg (AED) = 49°C

Propriétés viscoélastiques linéaires à 1 Hz (cône/plan 20mm):

| **Température /°C** | **10** | **20** | **40** | **60** | **80** |
|---|---|---|---|---|---|
| Module de stockage G'/Pa | 9120000 | 5770000 | 6540000 | 246000 | 20700 |
| Module de dissipation G"/Pa | 834000 | 829000 | 1180000 | 272000 | 41300 |

- Note 3: Le Crayamid 115 est un polyamide (Mw -2000-4000 g/mol); produit de condensation d'un dimère d'acide type TOFA (abréviation anglo-suédoise de Tall Oil Fatty Acid ou acide gras provenant du pin) et de triethylene tetramine.

### Exemple 6 :

Des portions de 30g de solution mère (exemple 5) sont versées dans des moules de PTFE (⌀=75mm) placés dans une enceinte non totalement hermétique permettant l'évaporation très lente du solvant.

Au bout d'une semaine, le film obtenu peut être détaché du moule et manipulé. Le solvant résiduel est totalement éliminé au bout de quelques heures sous vide ou de quelques semaines à pression ambiante. Cette méthode produit des films souples (épaisseur au centre 0.65mm), translucides et légèrement collants à température ambiante.

### Exemple 7 :

50g de Crayamid 140 (• Note 4) et 15g d'urée sont traités suivant les indications de l'exemple 5. La solution mère obtenue (à 13 % d'extrait sec) est lavée par 2x100 mL d'eau salée, séchée sur sulfate de magnésium et filtrée sur 4g de gel de silice. Les films préparés à partir de cette solution suivant les indications de l'exemple 6 sont transparents, souples et non collants. L'épaisseur au centre est 0.70 mm. Ces films peuvent être découpés de manière précise à l'emporte-pièce ou à l'aide d'outils coupants. Les objets ainsi obtenus conservent leurs caractéristiques dimensionnelles.
- Note 4: Le Crayamid 140 est un polyamide (Mw ~2000-4000 g/mol), produit de condensation d'un dimère d'acide type TOFA (abréviation anglo-suédoise de Tall Oil Fatty Acid ou acide gras provenant du pin) et de triethylene tetramine.

### Exemple 8 :

0.22g de squalane (2,6,10,15,19,23-hexamethyltetracosane) sont additionnés à 10g de solution mère (exemple 7). Le mélange est versé dans un moule circulaire de PTFE de 50mm de diamètre. Le film préparé suivant les indications de l'exemple 6 (épaisseur film = 0.65mm) est dur et fortement diffusant Tg=42°C.

### Exemple 9 :

0.22g de tripropylène glycol sont additionnés à 10g de solution mère (exemple 7). Le mélange est versé dans un moule circulaire de PTFE de 50mm de diamètre. Le film préparé suivant les indications de l'exemple 6 (épaisseur film = 0.65mm) est mou et transparent Tg= 18° C.

## Revendications

1. Polymère supramoléculaire comprenant des motifs reliés par des liaisons hydrogène, ces motifs étant des monomères ou des prépolymères comprenant au moins une fonction choisie parmi les fonctions (1) et (3) et une deuxième fonction choisie parmi les fonctions (1) à (5) suivantes : 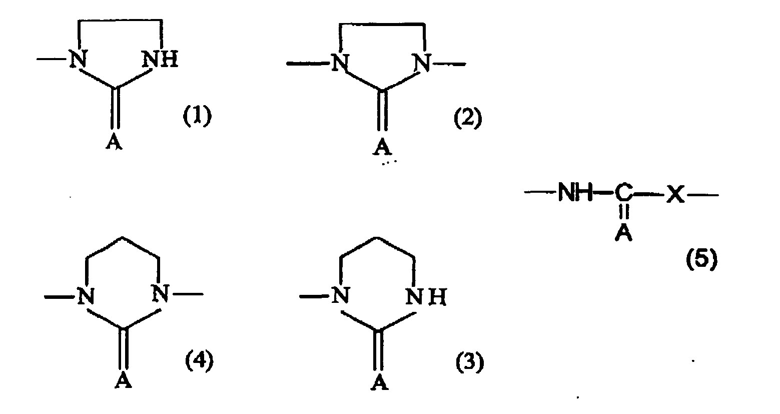 dans lesquelles A désigne l'oxygène, le soufre ou NH et X un motif quelconque; les liaisons hydrogène dans le polymère supra moléculaire se faisant entre deux fonctions identiques ou différentes choisies parmi les fonctions (1) à (5).

2. Polymère obtenu par la réaction d'un produit de formule (6) sur un monomére ou un prépolymère contenant une ou plusieurs des fonctions (1') à (4') : 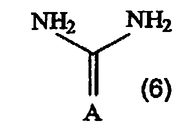 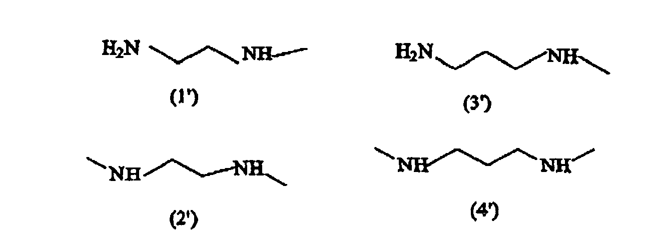 les atomes de carbone entre les azote dans les formules (1') à (4') pouvant être substitués.

3. Polymère selon la revendication 2 dans lequel "A" désigne un atome d'oxygène.

4. Composition comprenant un polymère selon l'une quelconque des revendications 1 à 3.

5. Utilisation d'un polymère selon l'une quelconque des revendications 1 à 3 comme modificateur de rhéologie pour des peintures ou des revêtements.

6. Utilisation d'un polymère selon l'une quelconque des revendications 1 à 3 comme additif pour faire varier la fluidité des peintures epoxy avec la température et en particulier les peintures en poudre.

7. Utilisation d'un polymère selon l'une quelconque des revendications 1 à 3 comme additif dans la mise en oeuvre des thermoplastiques pour effectuer une reticulation reversible.

8. Utilisation d'un polymère selon l'une quelconque des revendications 1 à 3 comme additif pour faciliter le recyclage des matières thermoplastiques par destruction des liaisons hydrogène par un solvant spécifique.

9. Utilisation d'un polymère selon l'une quelconque des revendications 1 à 3 comme additif dans des revêtements pour ensuite faciliter leur décapage par un solvant spécifique des liaisons hydrogène.

10. Utilisation d'un polymère selon l'une quelconque des revendications 1 à 3 comme additif pour la modification choc des polyamides.

11. Utilisation d'un polymère selon l'une quelconque des revendications 1 à 3 comme additif dans des lubrifiants.

12. Utilisation d'un polymère selon l'une quelconque des revendications 1 à 3 comme additif dans les hot melts.

13. Utilisation d'un polymère selon l'une quelconque des revendications 1 à 3 comme hot melt.

14. Procédé d'obtention d'un monomère portant les fonctions (1) et (5): 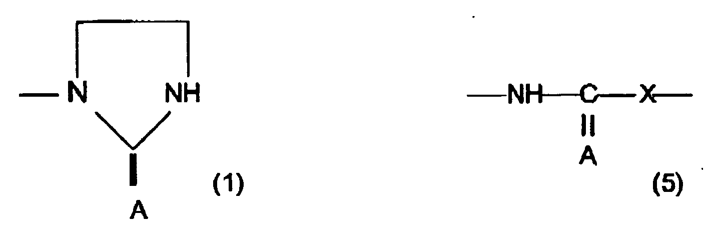 dans lesquelles A désigne l'oxygène et X un motif quelconque, sachant que l'on fait réagir de l'urée sur la diéthylène triamine, pour obtenir 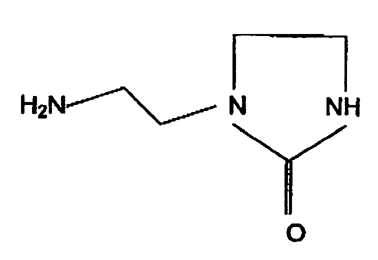 que l'on fait réagir ensuite sur un monomère ou un prépolymère portant au moins une fonction acide carboxylique.

## Claims

1. Supramolecular polymer comprising units connected via hydrogen bonds, these units being monomers or prepolymers comprising at least one functional group chosen from the functional groups (1) and (3) and a second functional group chosen from the following functional groups (1) to (5): 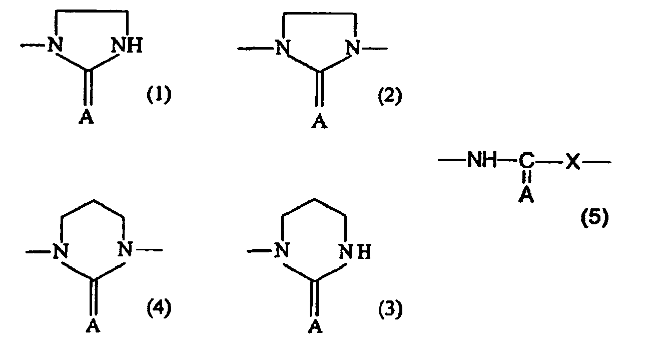 in which A denotes oxygen, sulphur or NH and X denotes any unit; the hydrogen bonds in the supramolecular polymer being formed between two identical or different functional groups chosen from the functional groups (1) to (5) .

2. Polymer obtained by the reaction of a product of formula (6) with a monomer or a prepolymer comprising one or more of the functional groups (1') to (4'): 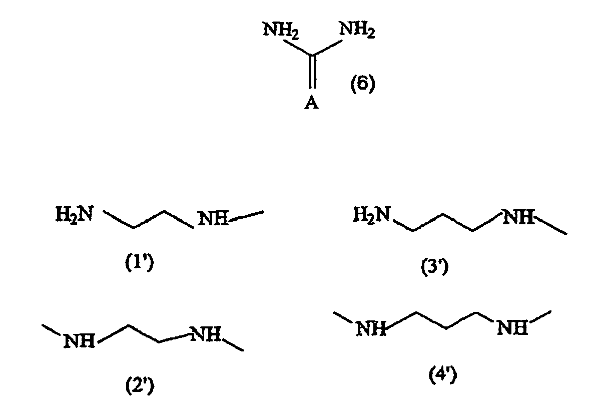 it being possible for the carbon atoms between the nitrogens in the formulae (1') to (4') to be substituted.

3. Polymer according to Claim 2, in which "A" denotes an oxygen atom.

4. Composition comprising a polymer according to any one of Claims 1 to 3.

5. Use of a polymer according to any one of Claims 1 to 3 as rheology modifier for paints or coatings.

6. Use of a polymer according to any one of Claims 1 to 3 as additive for varying the fluidity of epoxy paints with temperature and in particular powder paints.

7. Use of a polymer according to any one of Claims 1 to 3 as additive in the processing of thermoplastics for carrying out reversible crosslinking.

8. Use of a polymer according to any one of Claims 1 to 3 as additive for facilitating the recycling of thermoplastics by destroying the hydrogen bonds with a specific solvent.

9. Use of a polymer according to any one of Claims 1 to 3 as additive in coatings for subsequently facilitating their stripping by a solvent specific for hydrogen bonds.

10. Use of a polymer according to any one of Claims 1 to 3 as additive for the impact modification of polyamides.

11. Use of a polymer according to any one of Claims 1 to 3 as additive in lubricants.

12. Use of a polymer according to any one of Claims 1 to 3 as additive in hot melts.

13. Use of a polymer according to any one of Claims 1 to 3 as hot melt.

14. Process for producing a monomer carrying the functional groups (1) and (5): 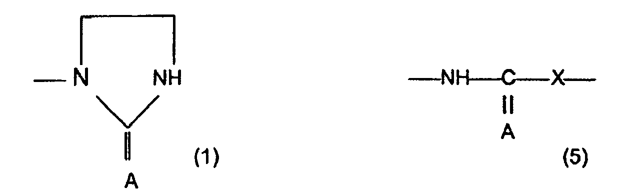 in which A denotes oxygen and X denotes any unit, it being known that urea is reacted with diethylenetriamine to produce 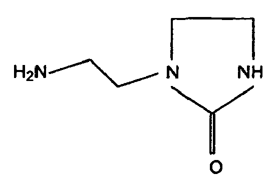 which is subsequently reacted with a monomer or a prepolymer carrying at least one carboxylic acid functional group.

## Patentansprüche

1. Supramolekulares Polymer mit über Wasserstoffbrückenbindungen verbundenen Einheiten, bei welchen es sich um Monomere oder Prepolymere mit mindestens einer unter den Funktionen (1) und (3) ausgewählten Funktion und einer unter den folgenden Funktionen (1) bis (5) ausgewählten zweiten Funktion: 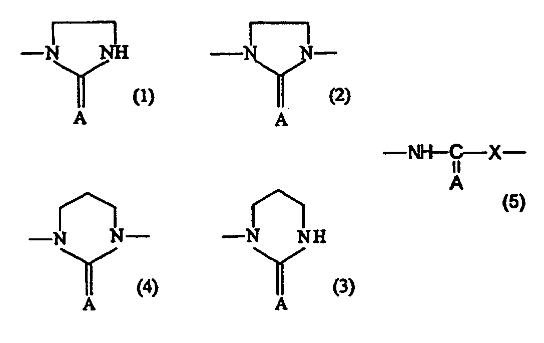 worin A für Sauerstoff, Schwefel oder NH steht und X für eine beliebige Einheit steht, handelt; wobei die Wasserstoffbrückenbindungen in dem supramolekularen Polymer sich zwischen zwei gleichen oder verschiedenen, unter den Funktionen (1) bis (5) ausgewählten Funktionen bilden.

2. Polymer, erhalten durch Umsetzung eines Produkts der Formel (6) mit einem Monomer oder Prepolymer mit einer oder mehreren der Funktionen (1') bis (4'): 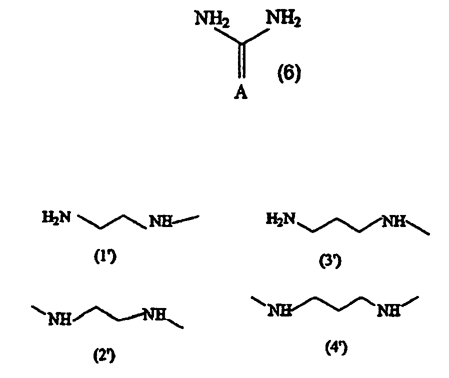 wobei die Kohlenstoffatome zwischen den Stickstoffatomen in den Formeln (1') bis (4') substituiert sein können.

3. Polymer nach Anspruch 2, in dem "A" für ein Sauerstoffatom steht.

4. Zusammensetzung, enthaltend ein Polymer nach einem der Ansprüche 1 bis 3.

5. Verwendung eines Polymers nach einem der Ansprüche 1 bis 3 als Rheologiemodifikator für Lacke oder Beschichtungen.

6. Verwendung eines Polymers nach einem der Ansprüche 1 bis 3 als Additiv zur Variation der Fließfähigkeit von Epoxidlacken mit der Temperatur und insbesondere Pulverlacken.

7. Verwendung eines Polymers nach einem der Ansprüche 1 bis 3 als Additiv bei der Verwendung von Thermoplasten zur Herbeiführung einer reversiblen Vernetzung.

8. Verwendung eines Polymers nach einem der Ansprüche 1 bis 3 als Additiv zur Erleichterung der Rezyklierung von thermoplastischen Materialien durch Zerstörung der Wasserstoffbindungen mit einem spezifischen Lösungsmittel.

9. Verwendung eines Polymers nach einem der Ansprüche 1 bis 3 als Additiv in Beschichtungen zur nachfolgenden Erleichterung ihres Abbeizens mit einem für Wasserstoffbrückenbindungen spezifischen Lösungsmittel.

10. Verwendung eines Polymers nach einem der Ansprüche 1 bis 3 als Additiv zur Schlagzähmodifizierung von Polyamiden.

11. Verwendung eines Polymers nach einem der Ansprüche 1 bis 3 als Additiv in Gleit- oder Schmiermitteln.

12. Verwendung eines Polymers nach einem der Ansprüche 1 bis 3 als Additiv in Hotmelts.

13. Verwendung eines Polymers nach einem der Ansprüche 1 bis 3 als Hotmelt.

14. Verfahren zur Herstellung eines Monomers mit den Funktionen (1) und (5): 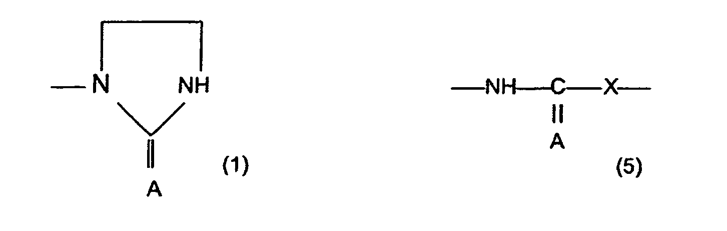 worin A für Sauerstoff steht und X für eine beliebige Einheit steht, bei dem man Harnstoff mit Diethylentriamin zu 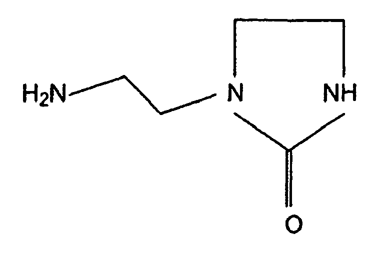 umsetzt und dieses dann mit einem Monomer oder Prepolymer mit mindestens einer Carbonsäurefunktion umsetzt.
